(19) **Europäisches Patentamt**
**European Patent Office**
**Office européen des brevets**

(11) **EP 3 051 454 A1**

(12) **EUROPEAN PATENT APPLICATION**

(43) Date of publication:
**03.08.2016 Bulletin 2016/31**

(51) Int Cl.:
***G06F 21/36*** *(2013.01)* ***G06F 21/46*** *(2013.01)*
***H04L 9/08*** *(2006.01)*

(21) Application number: **15020012.9**

(22) Date of filing: **31.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alsalloum, Ziyad Saleh M**
**Slough, Berkshire SL3 0NS (GB)**

(72) Inventor: **Alsalloum, Ziyad Saleh M**
**Slough, Berkshire SL3 0NS (GB)**

(54) **Geographical passwords**

(57) A method to construct an access credential based on geographical information. Users can select geographical locations (such as favorite places, mountains, trees, rivers or others) as their access credential to different systems. Selecting a geographical area can be done using different ways and shapes, a user - for example - can place a circle around her favorite mountain, or a triangle around her favorite set of trees. No matter how geographical areas are selected, the geographical information that can be driven from these areas form the access credential.

FIG. **1**

**Description**

BACKGROUND OF THE INVENTION

Humans - in general - do not prefer to memorize characters and if they had to, they do it in the least possible amount. This human behavior - in the context of conventional passwords - leads to different vulnerabilities, including:

• Using passwords that are vulnerable to dictionary attacks.

• Using passwords that are short enough to be vulnerable to brute-force attacks.

• Using the same password for different accounts.

• Constructing a password using obvious information, such as birthdays or addresses, making the password easy to guess.

• Avoid changing the password according to a recommended time interval.

• In the event of changing a password, the new password selected by the user is usually not very different from the previous one.

These vulnerabilities have been a main reason to many accounts compromises.

SUMMARY OF THE INVENTION

To address the vulnerabilities mentioned previously, this present invention proposes geographical passwords. We define a Geographical password as:

A Geographical password is a password that has been constructed based on geographical information.

We mean by geographical information the "knowledge acquired through processing geographically referenced data;" that is, data identified according to places on the Earth's surface. (Li, B. (2007) Information services, geography In Encyclopedia of GIS. Springer)

Geographical information (e.g. lands, rivers, volcanos, mountains) are very familiar to humans, whom have a remarkable ability to remember places they have visited, or wish to visit. The geographical password recognizes this characteristic in the human and utilize it for access credentials.

Thus methods consistent with embodiments of the present invention, where users are able to select geographical locations as their access credentials would mitigate many vulnerabilities of the existing password-based authentication systems. That is because geographical locations are:

• Easy to remember and hard to forget; especially if there were feelings and memories associated with the selected places.

• Diverse; there are many geographical locations where the user can select from.

• Hard to predict; as users choose places based on their preferences and experiences.

These elements add strength to the access credentials and makes it harder for adversaries to compromise.

BRIEF DESCRIPTION OF THE DRAWINGS

The invention will now be described solely by way of example and with reference to the accompanying drawings in which:

FIG. **1** User selecting a geographical location (by drawing a polygon around a sandstone monolith in Australia) as her geographical password.
FIG. **2** User selecting a geographical location (by selecting a rectangle containing a junction within Mexico City in Mexico) to form her geographical password.

FIG. **3** User selecting a geographical location (by selecting a rectangle containing a small pyramid in Egypt) as her geographical password and transforming it to a hashing value.

FIG. **4** User selecting a geographical location (by selecting a rectangle containing a Giant Plateau in the Arabian Peninsula) as her geographical password and transforming it to a keyed hash value, where the secret key is a memorable string of characters.

FIG. **5,** User selecting a geographical location (by selecting a rectangle containing Royal Holloway, Univ. of London library building in United Kingdom) as her geographical password and transforming it to a keyed hash value, where the secret key is 128-bit of length and is randomly generated.

## DETAILED DESCRIPTION OF THE INVENTION

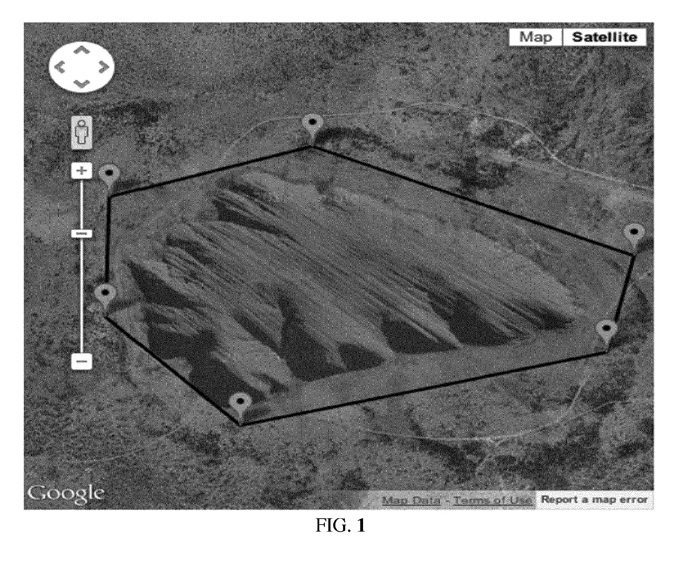

FIG. **1** shows a broad embodiment of the present invention, a user selecting a geographical location (by drawing a polygon around a sandstone monolith in Australia) as her geographical password. Selecting a geographical area can be done using different ways and shapes, a user - for example - can place a circle around his favorite mountain, or a triangle around his favorite set of trees. No matter how geographical areas are selected, the geographical information that can be driven from these areas (such as longitude, latitude, altitude, areas, perimeters, sides, angels, radius, or others) form the geographical password.

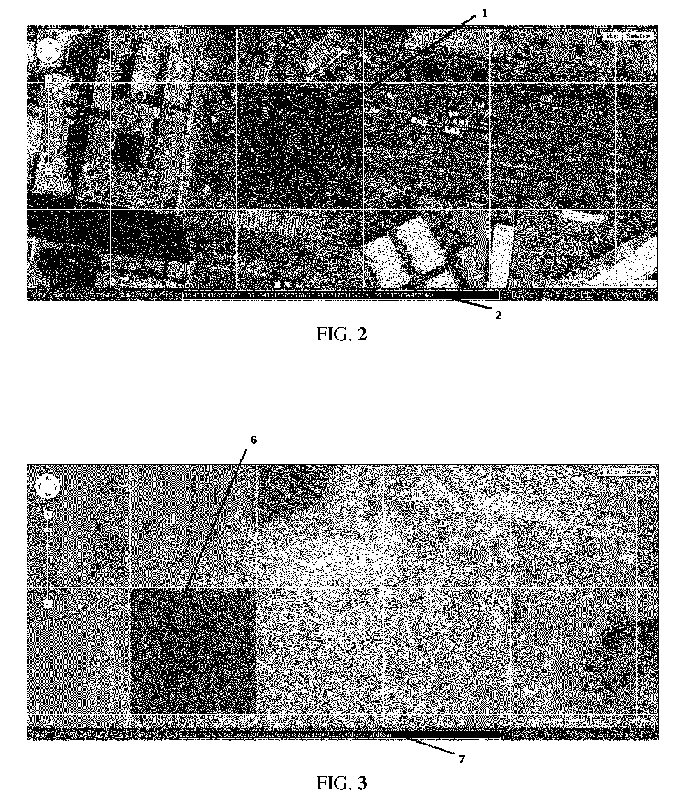

In FIG. **2** we show a more detailed embodiment of present invention, where we divide the planet earth into small rectangular geographical areas 1, where each rectangle represent a geographical password 2. For better user experience and ease of use, we divide earth into different layers where each layer represent a zoom level which has a different rectangular geographical area size.

Let $\phi_{sw}$ be the longitude coordinate at the south-west angle of the rectangular geographical area and $\phi_{se}$ be the longitude coordinate at the south-east angle. Let the difference between the two previous coordinates be:

$$\Delta\phi_z = \left|\phi_{sw} - \phi_{se}\right|, \text{ where } z \text{ is the zoom level} \qquad (1)$$

Let $\lambda_{sw}$ be the latitude coordinate at the south-west angle of the rectangular geographical area and $\lambda_{nw}$ be the latitude coordinate at the north-west angle. Let the difference between the two previous coordinates be:

$$\Delta\lambda_z = \left|\lambda_{sw} - \lambda_{nw}\right|, \text{ where } z \text{ is the zoom level} \qquad (2)$$

So if we assume the point at the south-west angle of the spherical rectangle is $(\phi_{sw}, \lambda_{sw})$ then the point at the north-east angle will be $(\phi_{sw} + \Delta\phi_z, \lambda_{sw} + \Delta\lambda_z)$. Therefore the larger $+ \Delta\lambda_z)$. and $\Delta\lambda_z$ are, the larger the area the user can select as her geographical password (represented as a spherical rectangle in this embodiment example).

We only need to know the south-west and the north-east points to identify the spherical rectangle *P*; for the sake of this embodiment we will choose those two points as the geographical information that form our geographical password, therefore:

$$P_x = \left\{ (\phi_{sw}, \lambda_{sw}), (\phi_{sw} + \Delta\phi_z, \lambda_{sw} + \Delta\lambda_z) \right\} \qquad (3)$$

Let $P_x$ denote the rectangular geographical area selected in x order. So $P_2$, for example, is the second rectangular geographical area selected by the user as part of her geographical password. In our invention embodiment, the order in which the user selects her geographical locations is considered; therefore, let $GeoGP_q$ denote a geographical password, *where q* is the sequence number in which the *GeoGP* has been selected; if $GeoGP_1 = \{P_1, P_2, P_3\}$ and $GeoGP_2 = \{P_2, P_1, P_3\}$, then $GeoGP_1 \neq GeoGP_2$. And since the user can not select the geographical location twice, the embodiment does not allow repetition.

Let $r_z$ be the number of geographical locations selected at zoom level *z* and *let j* be the number of zoom levels available in the mechanism. *Let R* be the total number of selected geographical locations that forms the geographical password, therefore:

$$R = r_0 + r_1 + \cdots + r_j; \quad r_j \geq 0 \qquad (4)$$

Let $n_z$ be the number of geographical locations the user can select from at zoom level $z$; therefore, the total size of the geographical password space is

$$N = n_0 + n_1 + \cdots + n_j; \quad n_j > 0 \qquad (5)$$

Using

$$_nP_r = \frac{n!}{(n-r)!} \qquad (6)$$

then based on 4, 5, and 6, the number of possible ways (permutations) a user can select a geographical password, can be described by:

$$Q = \frac{n_0!}{(n_0 - r_0)!} + \cdots + \frac{n_j!}{(n_j - r_j)!} = \frac{N!}{(N-R)!} \qquad (7)$$

Therefore, as the geographical locations available (*N*) and the selected geographical locations *(R)* - as part of the GeoGP - increase, Q would increase as well; which make it more difficult for adversaries to guess the GeoGP.

In FIG. **3** we further improve present invention embodiment described in FIG. **2** by hashing the GeoGP 7 selected by the user to hide the actual rectangular geographical location 6.

$$HASH(GeoGP_q) = H^q \qquad (8)$$

Since the embodiment does not allow selecting a geographical location more than once and the order in which the location is selected is considered, then the entropy (the measure of uncertainty of a GeoGP) in bits can be described by the following formula:

$$E = \log_2({_NP_R}) \qquad (9)$$

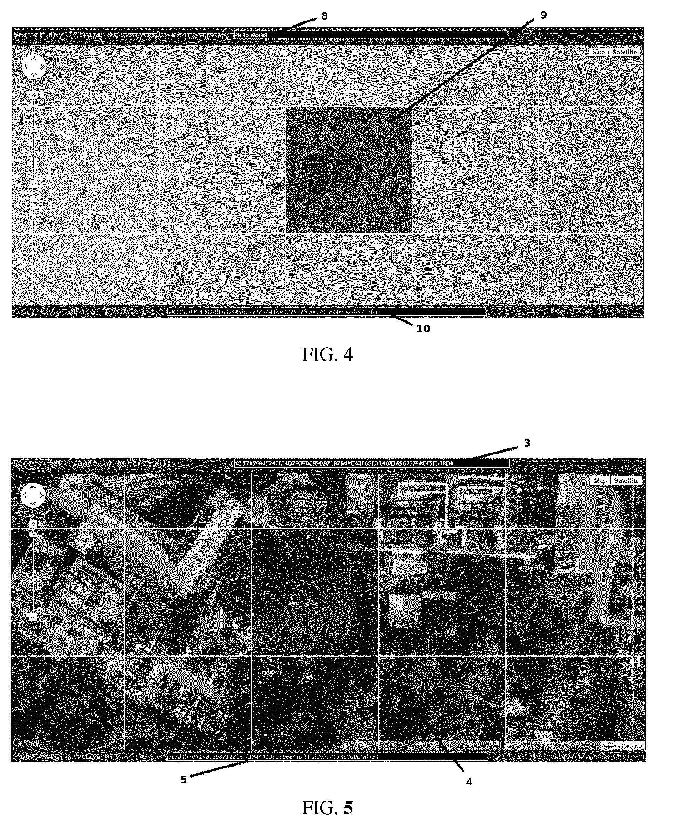

In FIG. *4* we further improve present invention embodiment described in FIG. 2, by increasing the entropy using a keyed-hash message authentication code (HMAC) 10 using a memorable string of characters 8 (i.e. word or a phrase) as a *key* for each user to hide the selected rectangular geographical location 9.

$$HMAC(K_u, geogp_q) = HASH((K_u \oplus opad) \| HASH((K_u \oplus ipad) \| geogp_q)) = H_u^q \qquad (10)$$

Where $K_u$ is the key for the user *u* and $H_u^q$ is the keyed hash value of user's *u GeoGPq*. So the user can type a word or a phrase as her secret key before forming her GeoGP. This will help avoid precompiled hashes attacks, such as Rainbow tables. However, because users usually tend to choose short and easy to remember words as their keys and avoid complicated alphanumeric case sensitive keys, the entropy is reduced; we assume 2.5 bits as entropy for each character of the key. Therefore after adding the secret key to the embodiment, the entropy becomes

$$E = \log_2({}_NP_R) + (l \times 2.5) \qquad (11)$$

Where *l* is the length of the key. However, allowing the user to pick her own key will make the key vulnerable to redundancy, which might lead to more than one user using the same password hash.

In FIG. 5 we further improve present invention embodiment described in FIG. 2, by increasing the entropy using a unique random key 3 for each user to hide the selected rectangular geographical location 4, which would increase the entropy of the embodiment and make each hash 5 distinctive. The entropy after adding a randomly generated key, can be described by

$$E = \log_2({}_NP_R \times b^l) \qquad (12)$$

Where b is the size of the key space.

Modifications

It will be appreciated that still further embodiments of the present invention will be apparent to those skilled in the art in view of the present disclosure. It is to be understood that the present invention is by no means limited to the particular constructions herein disclosed and/or shown in the drawings, but also comprises any modifications or equivalents within the scope of the invention.

**Claims**

1.   A method to construct an access credential that has been formed based on geographically referenced data extracted from within a user drawn border on a geographical image of an area on planet earth.

2.   A method to construct an access credential according to claim 1, in which geographically referenced data extracted constitute one or a combination of the following: Latitude, longitude, and altitude.

FIG. 1

FIG. **2**

FIG. **3**

FIG. 4

FIG. 5

Europäisches
Patentamt

European
Patent Office

Office européen
des brevets

# EUROPEAN SEARCH REPORT

Application Number

EP 15 02 0012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/185796 A1 (ALSALLOUM ZIYAD S [SA]) 3 July 2014 (2014-07-03) * the whole document * ----- | 1,2 | INV. G06F21/36 G06F21/46 H04L9/08 |

TECHNICAL FIELDS SEARCHED (IPC)

H04L
G06F

The present search report has been drawn up for all claims

| Place of search | Date of completion of the search | Examiner |
|---|---|---|
| The Hague | 18 September 2015 | Cartrysse, Kathy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 051 454 A1**

## ANNEX TO THE EUROPEAN SEARCH REPORT
## ON EUROPEAN PATENT APPLICATION NO.

EP 15 02 0012

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2015

| Patent document cited in search report | Publication date | Patent family member(s) | Publication date |
|---|---|---|---|
| US 2014185796 A1 | 03-07-2014 | NONE | |

For more details about this annex : see Official Journal of the European Patent Office, No. 12/82

**REFERENCES CITED IN THE DESCRIPTION**

**Non-patent literature cited in the description**

- Information services, geography. **LI, B.** Encyclopedia of GIS. Springer, 2007